# EUROPÄISCHE PATENTSCHRIFT

(11) **EP 0 622 280 B1**
(45) Veröffentlichungstag und Bekanntmachung des Hinweises auf die Patenterteilung: **27.08.1997**
(21) Anmeldenummer: 94105822.4
(22) Anmeldetag: 15.04.1994
(51) Int. Cl.: B60S 1/52

(54) **Wascheinrichtung für eine Lichtscheibe einer Leuchte oder eines Scheinwerfers**
Washing device for the front glass of a lamp or a headlamp
Dispositif de lavage pour le verre frontal d'une lampe ou d'un phare

(30) Priorität: 27.04.1993 DE 9306316 U
(43) Veröffentlichungstag der Anmeldung: 02.11.1994
(73) Patentinhaber: Hella KG Hueck & Co., 59552 Lippstadt (DE)
(72) Erfinder: Lind, Thomas, D-59597 Erwitte (DE)

(56) Entgegenhaltungen:
- DE-A- 4 121 316

## Beschreibung

Die Erfindung betrifft eine Wascheinrichtung für eine Lichtscheibe einer Leuchte oder eines Scheinwerfers eines Fahrzeugs nach dem Obergriff des Anspruchs 1.

Eine solche Wascheinrichtung ist aus dem deutschen Gebrauchsmuster 86 13 734 bekanntgeworden. Hierbei ist der zweite Rohrstutzen in einem Gehäuse einer hydraulischen Verstellvorrichtung axial geführt und ragt mit einem Endabschnitt aus einer Öffnung des Gehäuses heraus. Das Gehäuse der Verstellvorrichtung ist vom Fahrzeuginneren her mit dem freien Endabschnitt des zweiten Rohrstutzens durch eine Öffnung in dem inneren Karosserieteil hindurchgeführt und liegt mit einem das Gehäuse umgebenden Flansch an dem Randbereich der Öffnung des inneren Karosserieteils an. Der Flansch des Gehäuses ist mit Befestigungsmitteln, wie z. B. Befestigungsschrauben, an dem inneren Karosserieteil befestigt. Der erste Rohrstutzen ist mit einem Gehäuse der Düse verbunden. Das Gehäuse der Düse ist von einem auf das Gehäuse aufgesetzten kappenförmigen Bauteil abgedeckt. Beim Montieren der Düse, des Gehäuses der Düse, der das Gehäuse abdeckenden Kappe und des mit dem Gehäuse starr verbundenen Rohrstutzens von der Außenseite der Karosserie her, wird der erste Rohrstutzen in den freien Endabschnitt des zweiten Rohrstutzens der hydraulischen Verstellvorrichtung eingeschoben, bis der obere Kappenrand an die Außenseite des äußeren Karosserieteils anschlägt. Dieser von der Außenseite des äußeren Karosserieteils gebildete Anschlag für die Kappe ist in einem Abstand zu dem inneren Karosserieteil angeordnet. Zwischen diesem Anschlag des äußeren Karosserieteils und dem freien Endabschnitt des zweiten Rohrstutzens, welcher über das Gehäuse der hydraulischen Verstellvorrichtung an dem zweiten Karosserieteil befestigt ist, können sehr große Toleranzbereiche bestehen. Diese Toleranzbereiche sind besonders groß, wenn der äußere und innere Karosserieteil an von der Düse und der hydraulischen Verstelleinrichtung weit entfernten Stellen miteinander verbunden und weit voneinander beabstandet sind. Die aus dem deutschen Gebrauchsmuster 86 13 734 bekannte Wascheinrichtung ist auch aus der Praxis bekannt. Der erste Rohrstutzen ist mit seinem die Düse abgewendeten Endabschnitt klemmend in den zweiten Rohrstutzen eingeschoben. Damit die Verbindung zwischen dem ersten und zweiten Rohrstutzen dicht ist und eine feste Verbindung zwischen dem ersten und zweiten Rohrstutzen sicher ist, besteht zwischen dem ersten und zweiten Rohrstutzen eine Preßpassung. Hierbei ist es nachteilig, daß der erste Rohrstutzen nur mit einem sehr großen Kraftaufwand in den zweiten Rohrstutzen einschiebbar ist und bei einem notwendigen Wechsel der Düse die zwischen den beiden Rohrstutzen gebildete Steckkupplung nur mit einem sehr großen Kraftaufwand lösbar ist. Beim Lösen können auch die Rohrstutzen beschädigt werden, insbesondere dann, wenn sie aus einem spröden Kunststoff hergestellt sind. Außerdem kann beim Lösen der Steckkupplung die hydraulische Verstellvorrichtung in ihrem Inneren beschädigt werden. Zudem ist es bei der bekannten Wascheinrichtung von Nachteil, daß der die Düse tragende erste Rohrstutzen gegenüber seiner Soll-Lage verdreht montiert werden kann und wegen der zwischen den beiden Rohrstutzen bestehenden Preßpassung die Kohäsionskräfte zwischen ihnen so groß sind, daß der erste Rohrstutzen mit Düse nicht mehr in seine Soll-Lage gedreht werden kann, ohne die Rohrstutzen zu beschädigen.

Aus der DE 29 31 893 A1 ist eine Wascheinrichtung für eine Lichtscheibe eines Fahrzeugs bekanntgeworden, bei welcher der die Düse tragende erste Rohrstutzen auf den zweiten Rohrstutzen aufgeschoben und selbstrastend verbunden ist. Durch die selbstrastende Verbindung sind der erste und der zweite Rohrstutzen nur an einer bestimmten Stelle fest verbindbar. Außerdem kann der die Düse tragende erste Rohrstutzen in jeder beliebigen Drehstellung montiert werden.

Aufgabe der Erfindung ist es, die im Oberbegriff des Anspruchs 1 beschriebene Wascheinrichtung für eine Lichtscheibe einer Leuchte oder eines Scheinwerfers derart zu gestalten, daß der erste und der zweite Rohrstutzen leichtgängig ineinandersteckbar sind und dabei trotzdem der erste Rohrstutzen, um zwischen dem äußeren und inneren Teil bestehende Toleranzen ausgleichen zu können, in jeder beliebigen axialen Stellung an dem zweiten Rohrstutzen sowohl sicher gegenüber einem möglichen Lösen der zwischen den beiden Rohrstutzen bestehenden Steckverbindung als auch verdrehsicher arretierbar ist.

Diese Aufgabe der Erfindung wird durch die Merkmale des Anspruchs 1 gelöst. Durch die eine Ratsche und Sperrklinke aufweisende Arretierungsvorichtung kann der erste und zweite Rohrstutzen so weit ineinandergeschoben werden, daß die Düse, ihr Gehäuse oder ein die Düse nach außen hin abdeckendes Bauteil unmittelbar an die Außenseite des Karosserieteils angrenzen und die gesamte Öffnung abdecken kann, durch welche der erste Rohrstutzen zum Karosserie-Inneren hindurchführt. Durch die axiale Führung zwischen dem ersten und zweiten Rohrstutzen ist sichergestellt, daß die Düse genau zu der ihr benachbarten Lichtscheibe ausgerichtet ist. Da der die Düse tragende erste Rohrstutzen sowohl gebenüber einem Herausziehen aus der Öffnung des äußeren Karosserieteils als auch gegenüber einem Verdrehen um seine Längsachse sicher arretiert ist, kann die Abdichtung zwischen dem ersten und zweiten Rohrstutzen durch eine zwischen ihnen eingesetzte Ringdichtung erfolgen. Ein leichtgängiges Ineinanderstecken des ersten und zweiten Rohrstutzens wird dadurch erzielt, daß der zweite Rohrstutzen Teil einer an dem inneren Karosserieteil befestigten hydraulischen Verstellvorrichtung ist, weil dann beim Ineinanderstecken die auftretenden Kräfte sehr klein sind und somit die hydraulische Verstellvorrichtung in ihrem Inneren nicht beschädigt werden kann.

Weiterhin ist es vorteilhaft, wenn die axiale Führung zwischen den beiden Rohrstutzen von einer Nut-Feder-Verbindung gebildet ist, wobei als zahnstangenartige Ratsche ein Ansatz dient, welcher in seiner Längsausdehnung in Fügerichtung des Rohrstutzens verläuft, an die Mantelfläche des eingeschobenen Rohrstutzens angeformt ist und als Feder für die Nut-Feder-Verbindung dient. Hierbei ist es zweckmäßig, wenn die Nut in die Innenseite des aufgeschobenen Rohrstutzens eingebracht ist und bis zum freien Ende des Rohrstutzens hin und geöffnet verläuft, und wenn die Sperrklinke von einem radial federnd ausgeführten und an den Öffnungsrand einer in den Grund der Nut eingebrachten Öffnung angeformten federnden Arm gebildet ist. Eine solche Lösung ist einfach und kostengünstig herstellbar. Außerdem ist der federnde Arm vor Beschädigung geschützt innerhalb der Öffnung angeordnet, in welche sich der federnde Arm hinein erstreckt. Ferner ist der die Nut und der den federnden Arm aufweisende Rohrstutzen, obwohl in die Nut die den federnden Arm bildende Öffnung eingebracht ist, durch die im Bereich der Öffnung verbleibenden Seitenwände der Nut ausreichend steif ausgeführt.

In diesem Zusammenhang ist es weiterhin vorteilhaft, wenn der federnde Arm mit seinem freien Endabschnitt zur Ratsche hinweist, zwischen zwei Zähne der Ratsche eingreift und im in Richtung der Längsausdehnung des Arms verlaufenden Querschnitt keilförmig gestaltet ist, wobei eine Keilfläche annähernd radial und quer zur Fügerichtung der Rohrstutzen verläuft und an einer radialen Fläche eines der Zähne der Ratsche anliegt, wobei diese radial verlaufenden Flächen an so einer Seite der Zähne der Ratsche bzw. des Keils des Arms angebracht sind, daß die radial verlaufenden Flächen beim Auseinanderziehen der Rohrstutzen unter Vorspannung aneinander liegen. Hierbei ist es zweckmäßig, wenn der federnde Arm und die radial verlaufende Fläche seines keilförmigen Endabschnitts vom freien Ende des Rohrstutzens, an dem der Arm angebracht ist, weg weisen. Dadurch kann die keilförmige Ausführung des freien Endabschnitts des federnden Arms ohne verstellbare Werkzeugteile hergestellt werden.

Von Vorteil ist es weiterhin, wenn der eingeschobene Rohrstutzen zwischen seinem freien Ende und der Ratsche mindestens eine in seine Mantelfläche eingebrachte Ringnut aufweist, in welche eine Ringdichtung eingesetzt ist, die umlaufend dicht an der Innenseite des aufgeschobenen Rohrstutzens anliegt. Dadurch ist nicht nur das Ineinanderschieben der beiden Rohrstutzen sehr leichtgängig, sondern auch eine hohe Dichtigkeit zwischen ihnen gewährleistet.

Ein weiterer Vorteil ist es, wenn die Nut der Nut-Feder-Verbindung in den aufgeschobenen Rohrstutzen so tief und der Ansatz des eingeschobenen Rohrstutzens so hoch ausgeführt ist, daß beim Ineinanderschieben der Rohrstutzen die Ringdichtung nicht an den freien Endabschnitt des federnden Arms anstoßen kann. Dadurch ist beim Ineinanderschieben der Rohrstutzen eine Beschädigung der Ringdichtung durch den federnden Arm nicht möglich, und somit ist die Abdichtung zwischen den beiden Rohrstutzen sicher.

Zudem ist es vorteilhaft, wenn das aufgeschobene Rohr in dem Endabschnitt, in welchem die Ratsche angeordnet ist, eine größere lichte Weite aufweist, als in dem Abschnitt, welcher zum eingeschobenen Rohrstutzen durch eine Dichtung abgedichtet ist. Diese größere lichte Weite in dem Endabschnitt des aufgeschobenen Rohrstutzens ermöglicht ein einfacheres Einfädeln der Rohrstutzen bei ihrem Ineinanderstecken. Außerdem kann die lichte Weite des die Nut aufweisenden Endabschnitts des einen Rohrstutzens so groß ausgeführt sein, daß beim Einführen des anderen Rohrstutzens zwischen der ihn umgebenden Ringdichtung und der Innenseite des die größere lichte Weite aufweisenden Endabschnitts Spiel besteht. Somit kann die Ringdichtung nicht durch einen scharfkantigen Rand der Nut beschädigt werden. In diesem Zusammenhang ist es weiterhin vorteilhaft, wenn der eingeschobene Rohrstutzen durch zumindest einen an seine Mantelfläche angeformten Vorsprung radial weitestgehend spielfrei in dem eine größere lichte Weite aufweisenden Endabschnitt des anderen Rohrstutzens gehalten ist. Ein solcher Vorsprung kann eine ringförmige Wulst sein. Besonders vorteilhaft ist es, wenn diese Ringwulst einen möglichst großen Abstand zu der Ringdichtung aufweist, weil dann die starr mit dem ersten Rohrstutzen verbundene Düse weitestgehend vibrationsfrei gehaltert ist.

Ein Ausführungsbeispiel der Erfindung ist in der Zeichnung dargestellt, und zwar zeigt
- Fig. 1: in einer Seitenansicht einen Scheinwerfer mit einer unterhalb des Scheinwerfers angeordneten Düse, welche von einem durch eine Öffnung eines äußeren Karosserieteils hindurchragenden Endabschnitt eines Rohrstutzens einer an einem inneren Karosserieteil befestigten hydraulischen Verstelleinrichtung getragen ist, in der Ruhe- und in der Gebrauchsstellung,

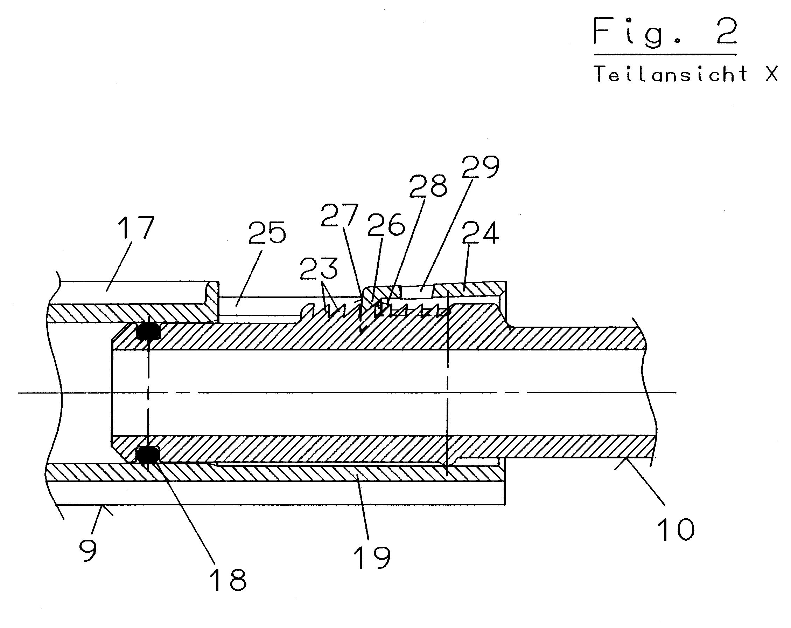

- Fig. 2: in einer Teilansicht X der Fig. 1 dicht ineinandergesteckte Rohrstutzen, welche die Verbindung zwischen der hydraulischen Verstellvorrichtung und der Düse herstellen und

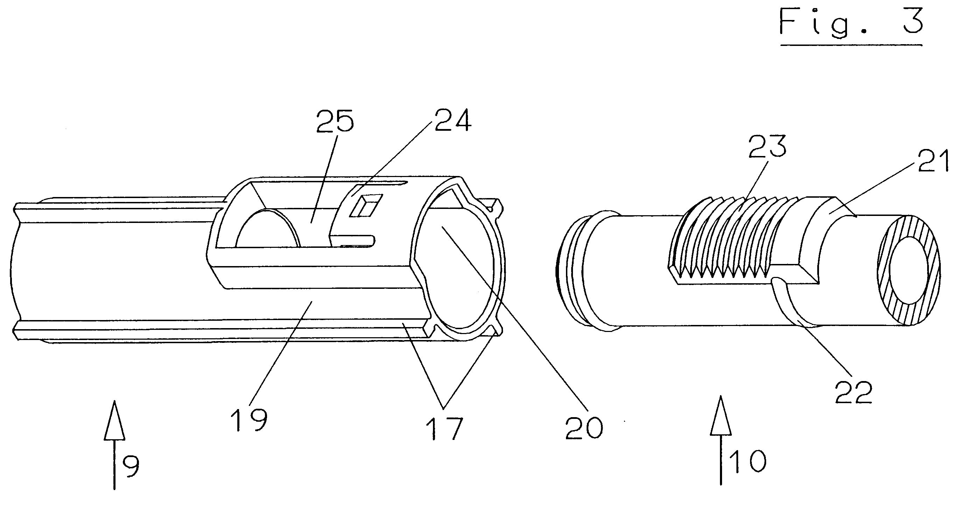

- Fig. 3: eine perspektivische Ansicht der beiden Rohrstutzen vor ihrem Zusammenfügen.

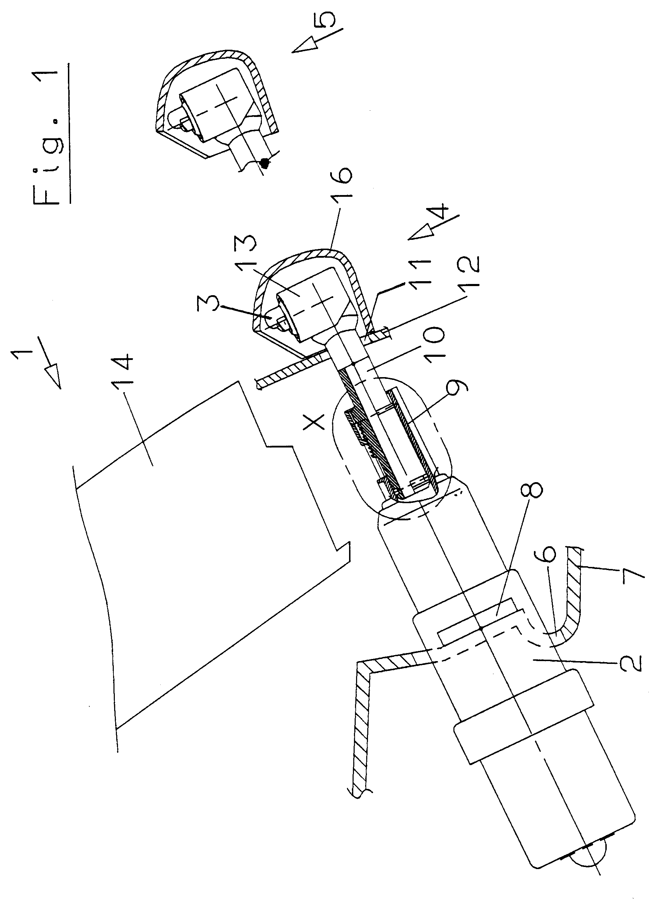

Fig. 1 zeigt einen Scheinwerfer (1) eines Kraftfahrzeuges, eine unterhalb des Scheinwerfers (1) angeordnete hydraulische Verstellvorrichtung (2) für eine Düse (3), welche durch die Verstellvorrichtung in eine Ruhestellung (4) und Gebrauchsstellung (5) bringbar ist. Das Gehäuse der hydraulischen Verstellvorrichtung (2) ist rohrförmig gestaltet und führt durch eine Öffnung (6) eines inneren Karosserieteils (7) hindurch. Das Gehäuse der Verstellvorrichtung (2) weist auf sich gegenüberliegenden Seiten jeweils einen radial nach außen weisenden Flansch (8) auf, welcher an dem zum Inneren der Karosserie hin gerichteten Randbereich der Öffnung (6) anliegt und mit Befestigungsmitteln, wie z. B. Befestigungsschrauben (nicht dargestellt), an dem Karosserieteil (7) befestigt ist. Das rohrförmige Gehäuse der Verstellvorrichtung (2) weist mit einem freien Endabschnitt und einem aus einer Öffnung dieses Endabschnitts herausragenden zweiten Rohrstutzen (9) zur Vorderseite des Fahrzeugs hin. In den zweiten Rohrstutzen (9) ist ein erster Rohrstutzen (10) eingeschoben, welcher mit einem zur Vorderseite des Kraftfahrzeugs hin weisenden Endabschnitt durch eine Öffnung (11) eines äußeren Karosserieteils (12) hindurchführt und an seinem freien Ende das Gehäuse (13) der Düse (3) trägt. Die Düse (3) ist in das Gehäuse (13) verstellbar eingesetzt (nicht dargestellt), um sie zur Vorderseite der Lichtscheibe (14) des Scheinwerfers (1) ausrichten zu können. Durch den Druck der Waschflüssigkeit ist der erste und zweite Rohrstutzen (9 und 10) zur Vorderseite des Fahrzeugs hin axial so weit bewegbar, daß er die Düse (3) von ihrer Ruhestellung (4) in die Gebrauchsstellung (5) verstellt. Erst in der Gebrauchsstellung (5) öffnet ein Ventil (nicht dargestellt) im Inneren der Verstellvorrichtung (2), und ein aus der Düse (3) austretender Sprühnebel trifft auf die Vorderseite der Lichtscheibe (14) auf und reinigt diese von ihrem Schmutz. Nach dem Reinigungsvorgang geht die Düse (2) durch axiales Bewegen des ersten und zweiten Rohrstutzens (9 und 10) in ihre Ruhestellung (4) zurück. In der Ruhestellung (4) liegt ein das Gehäuse (13) der Düse (3) nach außen hin abdeckendes kappenförmiges Bauteil (16) mit an die Innenseite der Kappe angebrachten Gummipuffern (nicht dargestellt) an der Außenseite des Randbereichs der Öffnung (11) des äußeren Karosserieteils (12) an. Zwischen dem Außenrand der Kappe (16) und dem Randbereich der Öffnung (11) des äußeren Karosserieteils (12) verbleibt ein kleiner Spalt.

Der zweite Rohrstutzen (9) weist an seiner Mantelfläche über seinen Umfang gleichmäßig verteilte, axial verlaufende Führungsrippen (17) auf, welche in entsprechend ausgestaltete Führungsnuten des Gehäuses der Verstellvorrichtung (2) eingreifen. Dadurch ist der zweite Rohrstutzen (9) in seinem gesamten axial verlaufenden Verstellweg an dem Gehäuse der Verstellvorrichtung (2) verdrehsicher arretiert. Der erste Rohrstutzen (10) ist mit dem Gehäuse (13) der Düse (3) einstückig aus Kunststoff hergestellt und weist an dem die Düse (3) abgewendeten Endabschnitt (18) eine in eine umlaufende Ringnut eingesetzte Ringdichtung (18) auf. Beim Einschieben des ersten Rohrstutzens (10) in den zweiten Rohrstutzen (9) hinein wird die Dichtung (18) zuerst durch einen eine größere lichte Weite aufweisenden freien Endabschnitt (19) mit Spiel hindurchgeführt und liegt erst, wenn die Düse ihre Ruhestellung (4) erreicht hat, an der sich daran anschließenden Zylinderfläche mit kleinerer lichter Weite unter Vorspannung an. Zwischen dem ersten Rohrstutzen (10) und dem zweiten Rohrstutzen (9) besteht eine Nut-(20)-Feder-(21)-Verbindung, durch welche der erste Rohrstutzen (10) in dem zweiten Rohrstutzen (9) axial geführt ist und an dem zweiten Rohrstutzen (9) verdrehsicher arretiert ist. Außerdem ist dadurch die Düse (3) in ihrer Gebrauchsstellung (5) immer genau zur Vorderseite der Lichtscheibe (14) des Scheinwerfers (1) ausgerichtet. Die Nut (20) der Nut-Feder-Verbindung ist in die Innenseite des zweiten Rohrstutzens (9) eingebracht und verläuft in ihrer Längsausdehnung axial zum Rohrstutzen (9) und über die gesamte Länge des eine größere lichte Weite aufweisenden Endabschnitts (19). Die Feder (21) ist ein an die Mantelfläche des ersten Rohrstutzens (10) angeformter Ansatz, welcher annähernd so lang wie die Nut (20) ausgeführt ist. In dem Abschnitt des Ansatzes (21) ist an die Mantelfläche des ersten Rohrstutzens (10) ein ringförmiger Vorsprung (22) angeformt, dessen Außendurchmesser annähernd spielfrei an der zylindrischen Innenfläche des eine größere lichte Weite aufweisenden Endabschnitts (19) des zweiten Rohrstutzens (9) anliegt.

Der Ansatz (21) des ersten Rohrstutzens (10) und die Nut (20) des zweiten Rohrstutzens (9), welche zur axialen Führung des ersten Rohrstutzens dienen, weisen zusätzlich für den ersten Rohrstutzen und somit für die Düse eine axiale Arretierungsvorrichtung auf. Die Arretierungsvorrichtung besteht aus einer Ratsche, welche von den in die radial gerichtete Fläche des Ansatzes (21) eingebrachten Zähnen (23) gebildet ist, und der an den zweiten Rohrstutzen angeformten Sperrklinke (24). Die Zähne (23) verlaufen quer zur Längsachse des ersten Rohrstutzens (10) und wie die radial gerichtete Fläche des Ansatzes (21) koaxial zu dieser. In die Wandung des Grundes der Nut (20) ist eine Öffnung (25) eingebracht, an deren dem freien Ende des zweiten Rohrstutzens (9) abgewandten Randabschnitt die Sperrklinke (24) angeformt ist, welche ein in Einsetzrichtung des ersten Rohrstutzens (10) gerichteter Arm ist, welcher radial federnd ausgeführt ist. Die Öffnung (25) ist rechteckförmig gestaltet und erstreckt sich mit ihren Seitenrändern bis an die Seitenwandungen der Nut (20) heran. Der federnde Arm (24) ist hakenförmig ausgeführt, und sein zur Längsachse der Rohrstutzen (9 und 10) weisender Schenkel (26) ist im Querschnitt keilförmig gestaltet. Mit diesem keilförmigen Endabschnitt (26) greift der Arm (24) federnd zwischen zwei Zähne der Ratsche des ersten Rohrstutzens (10) ein. Die entgegen der Einsetzrichtung des ersten Rohrstutzens (10) weisende Fläche (27) des keilförmigen Endabschnitts (26) verläuft annähernd radial zur Längsachse der Rohrstutzen (9 und 10) und liegt an einer ebenso radial verlaufenden Fläche eines der Zähne (23) an. Die der Fläche (27) gegenüberliegende Fläche (28) des Endabschnitts (26) verläuft in einem spitzen Winkel zur Fläche (27) und liegt flächig an einer Fläche eines der Zähne (23) an.

Der äußere Karosserieteil (12) ist eine Blende und erstreckt sich bis nahe an die Vorderseite der Lichtscheibe (14) des Scheinwerfers heran. Der Abstand zwischen dem äußeren Karosserieteil (12) und dem inneren Karosserieteil (7) ist wegen seiner Größe und weil die beiden Karosserieteile (7 und 12) nicht im Bereich der hydraulischen Verstelleinrichtung (2) miteinander verbunden sind, sehr grob toleriert. Damit bei solchen großen Toleranzen zwischen den beiden Karosserieteilen (7 und 12) gewährleistet ist, daß in der Ruhestellung (4) der Düse (3) die sie umgebende Kappe (16) mit ihrem äußeren Rand sehr nahe dem Randbereich der Öffnung (11) des äußeren Karosserieteils (12) verläuft, ist der die Düse (3) tragende erste Rohrstutzen (10) mit dem die Düse abgewendeten Endabschnitt ratschenartig in den zweiten Rohrstutzen (9) der hydraulischen Verstellvorrichtung (2) eingeschoben. Somit ist nach der Montage des ersten Rohrstutzens (10) mit der von ihm getragenen Düse von der Außenseite der Karosserie her nicht nur die große Toleranz zwischen den beiden Karosserieteilen (7 und 12) ausgleichbar, sondern auch die Öffnung (11) im äußeren Karosserieteil (12) kann kleiner als das die Düse (3) aufnehmende Gehäuse (13) in ihrem radialen Querschnitt zur Längsachse des Rohrstutzens (10) ausgeführt sein. Durch die Form der Zähne (23) und des im Querschnitt keilförmigen Endabschnitts (26) des federnden Arms (24), welcher zwischen zwei Zähne eingreift, ist zwar ein ratschenartiges Einschieben des ersten Rohrstutzens (10) in den zweiten Rohrstutzen (9) möglich, jedoch nicht ein Herausziehen, weil dann radiale Flächen des federnden Arms (24) und eines Zahns (23) fest aneinander liegen. In der Gebrauchsstellung (5) der Düse ist der federnde Arm (24) frei zugänglich, und ein Herausziehen des ersten Rohrstutzens (10) aus dem zweiten Rohrstutzen (9) ist möglich, wenn der federnde Arm (24) radial so weit angehoben wird, daß sein im Querschnitt keilförmiger Endabschnitt (26) aus dem Eingriff der Zähne (23) kommt. Das Anheben des federnden Arms (24) ist besonders einfach und leicht, wenn der federnde Arm mit einem Hilfswerkzeug, wie z. B. einem Schraubendreher (nicht dargestellt), radial nach außen angehoben wird. Dabei wird der freie Endabschnitt des Schraubendrehers in eine zentrale Aussparung (29) des federnden Arms (24) hineingesteckt und sein vom federnden Arm weg weisender Endabschnitt zur Düse hin bewegt, bis der Endabschnitt (26) des federnden Arms (24) aus dem Eingriff der Ratsche kommt.

### Bezugszahlen

### Wascheinrichtung für eine Lichtscheibe einer Leuchte oder eines Scheinwerfers

- (1): Scheinwerfer
- (2): Verstellvorrichtung
- (3): Düse
- (4): Ruhestellung
- (5): Gebrauchsstellung
- (6): Öffnung
- (7): inneres Karosserieteil
- (8): Flansch
- (9): zweiter Rohrstutzen
- (10): erster Rohrstutzen
- (11): Öffnung
- (12): äußeres Karosserieteil
- (13): Gehäuse
- (14): Lichtscheibe
- (15): Sprühnebel
- (16): Kappe
- (17): Führungsrippe
- (18): Ringdichtung
- (19): Endabschnitt
- (20): Nut
- (21): Feder
- (22): Vorsprung
- (23): Zähne
- (24): Sperrklinke
- (25): Öffnung
- (26): Schenkel
- (27): Fläche
- (28): Fläche
- (29): Aussparung

## Patentansprüche

1. Wascheinrichtung für eine Lichtscheibe einer Leuchte oder eines Scheinwerfers eines Fahrzeugs, mit einem eine Düse (3) tragenden ersten Rohrstutzen (10), welcher mit seinem der Düse (3) abgewendeten Ende voraus durch eine Öffnung (11) in einem äußeren Karosserieteil (12) hindurchführbar ist und mit einem zweiten Rohrstutzen (9), welcher in einem Gehäuse einer hydraulischen Verstellvorrichtung (2) axial verstellbar und verdrehsicher geführt ist und welcher auf den ersten Rohrstutzen (10) dicht aufgeschoben bzw. in diesen dicht eingeschoben ist, wobei die Verstellvorrichtung (2) mit einem Befestigungsmittel an einem inneren Karosserieteil (7) befestigbar ist und die Düse (3) durch die Verstellvorrichtung (2) in eine Ruhestellung, in welcher sie oder ein sie umgebendes Bauteil (16) an die Außenseite des äußeren Karosserieteils (12) angrenzt, bzw. in eine Gebrauchsstellung bringbar ist, dadurch gekennzeichnet, daß in der Ruhestellung der Düse (3) die ineinandergeschobenen Rohrstutzen (9 und 10) eine ihr Auseinanderziehen verhindernde selbsttätige Arretierungsvorrichtung aufweisen, welche aus einer an dem eingeschobenen Rohrstutzen (10) angebrachten zahnstangenartigen Ratsche (23) und einer an dem aufgeschobenen äußeren Rohrstutzen (9) angebrachten und in die Ratsche (23) eingreifenden federnden Sperrklinke (24) besteht, und daß zwischen den beiden Rohrstutzen (9 und 10) eine axiale Führung (20, 21) besteht, durch welche der erste Rohrstutzen (10) gegenüber einem Verdrehen um seine Längsachse arretiert ist.

2. Wascheinrichtung nach Anspruch 1, dadurch gekennzeichnet, daß die axiale Führung (20, 21) zwischen den beiden Rohrstutzen (9 und 10) von einer Nut-Feder-Verbindung gebildet ist.

3. Wascheinrichtung nach Anspruch 2, dadurch gekennzeichnet, daß die zahnstangenartige Ratsche (23) von einem Ansatz (21) gebildet ist, welcher in seiner Längsausdehnung in Fügerichtung der Rohrstutzen (9 und 10) verläuft, an die Mantelfläche des eingeschobenen Rohrstutzens (10) angeformt ist und als Feder für die Nut-Feder-Verbindung dient, wobei die Zähne der zahnstangenartigen Ratsche (23) in die radial gerichtete Fläche des Ansatzes (21) eingebracht sind und die Nut (20) in die Innenseite des aufgeschobenen Rohrstutzens (9) eingebracht ist und bis zum freien Ende des Rohrstutzens (9) hin und geöffnet verläuft.

4. Wascheinrichtung nach einem der Ansprüche 1 bis 3, dadurch gekennzeichnet, daß die Sperrklinke (24) von einem radial federnd ausgeführten und an dem aufgeschobenen Rohrstutzen (9) angeformten Arm gebildet ist, welcher an den Öffnungsrand einer in den Grund der Nut (20) eingebrachten Öffnung (25) angeformt ist.

5. Wascheinrichtung nach einem der Ansprüche 1 bis 4, dadurch gekennzeichnet, daß der federnde Arm (24) mit seinem freien Endabschnitt (26) zur Ratsche (23) hin weist, zwischen zwei Zähne der Ratsche (23) eingreift und im in Richtung der Längsausdehnung verlaufenden Querschnitt keilförmig gestaltet ist, wobei eine Keilfläche (27) annähernd radial und quer zur Fügerichtung der Rohrstutzen verläuft und an einer radialen Fläche eines der Zähne der Ratsche (23) anliegt, wobei diese radial verlaufenden Flächen an so einer Seite der Zähne der Ratsche (23) bzw. des Keils (26) des Arms (24) angebracht sind, daß die radial verlaufenden Flächen beim Auseinanderziehen der Rohrstutzen (9 und 10) unter Vorspannung aneinander liegen.

6. Wascheinrichtung nach Anspruch 5, dadurch gekennzeichnet, daß der federnde Arm (24) und die radial verlaufende Fläche (27) seines im Querschnitt keilförmigen Endabschnitts vom freien Ende des Rohrstutzens, an dem der Arm angebracht ist, weg weisen.

7. Wascheinrichtung nach einem der Ansprüche 1 bis 6, dadurch gekennzeichnet, daß in den federnden Arm (24) eine Aussparung (29) eingebracht ist, welche zum Eingriff eines stabförmigen Werkzeuges dient, mit welchem der federnde Arm (24) aus dem Eingriff der Ratsche (23) bringbar ist.

8. Wascheinrichtung nach einem der Ansprüche 1 bis 7, dadurch gekennzeichnet, daß der eingeschobene Rohrstutzen (10) zwischen seinem freien Ende und der Ratsche (23) mindestens eine in seine Mantelfläche eingebrachte Ringnut aufweist, in welche eine Ringdichtung (18) eingesetzt ist, welche umlaufend dicht an der Innenseite des aufgeschobenen Rohrstutzens (9) anliegt und daß die Nut (20) der Nut-Feder-Verbindung in den aufgeschobenen Rohrstutzen (9) so tief und der Ansatz (21) des eingeschobenen Rohrstutzens (10) so hoch ausgeführt ist, daß beim Ineinanderstecken der Rohrstutzen (9 und 10) die Ringdichtung (18) nicht an den freien Endabschnitt (26) des federnden Arms (24) anstoßen kann.

9. Wascheinrichtung nach einem der Ansprüche 1 bis 8, dadurch gekennzeichnet, daß der aufgeschobene Rohrstutzen (9) in dem Endabschnitt (19), in welchem die Ratsche (23) angeordnet ist, eine größere lichte Weite aufweist als in dem Abschnitt, welcher zum eingeschobenen Rohrstutzen (10) hin durch eine Ringdichtung (18) abgedichtet ist.

10. Wascheinrichtung nach Anspruch 9, dadurch gekennzeichnet, daß der eingeschobene Rohrstutzen (10) durch zumindest einen an seine Mantelfläche angeformten Vorsprung (22) radial weitestgehend spielfrei an dem eine größere lichte Weite aufweisenden Endabschnitt (19) des anderen Rohrstutzens (9) anliegt.

## Claims

1. Washer system for a lens plate of a vehicle lamp or headlamp, having a first pipe socket (10) which carries a nozzle (3) and which is adapted to be passed, with its end furthest from the nozzle (3) first, through an opening (11) in an outer vehicle body part (12), and having a second pipe socket (9) which is set in a housing of a hydraulic adjustment mechanism (2) so as to be adjustable axially and secured against torsion and which is pushed tightly onto or into the first pipe socket (10), the adjustment mechanism (2) being adapted to be fastened by an attachment means to an inner vehicle body part (7) and the nozzle (3) being adapted to be moved by the adjustment mechanism (2) into a rest position in which it, or a component (16) surrounding it, adjoins the outside of the outer vehicle body part (12), or alternatively into an operational position, characterized in that when the nozzle (3) is in the rest position the telescoped pipe sockets (9 and 10) have an immobilizing device which automatically prevents them from being drawn apart and which consists of a rack-type ratchet stop (23) mounted on the pushed-in pipe socket (10) and a resilient retaining catch (24) which is mounted on the pushed-on outer pipe socket (9) and engages into the ratchet stop (23), and that between the two pipe sockets (9 and 10) there is an axial guide (20, 21) which immobilises the first pipe socket (10) against twisting on its longitudinal axis.

2. Washer system according to claim 1, characterised in that the axial guide (20, 21) between the two pipe sockets (9 and 10) is formed by a tongue-and-groove joint.

3. Washer system according to claim 2, characterized in that the rack-type ratchet stop (23) is formed by a shoulder (21) which in its longitudinal extension runs in the direction in which the pipe sockets (9 and 10) are joined, is moulded onto the generated surface of the pushed-in pipe socket (10) and acts as a spring for the tongue-and-groove joint, the teeth of the rack-type ratchet stop (23) being incorporated into the radially aligned surface of the shoulder (21) and the groove (20) being incorporated into the inside of the pushed-on pipe socket (9) and being open as far as the free end of the pipe socket (9).

4. Washer system according to any of claims 1 to 3, characterized in that the retaining catch (24) is formed by an arm of radially resilient construction which is moulded on the pushed-on pipe socket (9) and which is moulded onto the rim of an opening (25) incorporated into the base of the groove (20).

5. Washer system according to any of claims 1 to 4, characterized in that the resilient arm (24) points with its free end portion (26) towards the ratchet stop (23), engages between two teeth of the ratchet stop (23) and is shaped like a wedge in the cross-section extending in the direction of the longitudinal extension, one cuneiform face (27) extending approximately radially and at a right angle to the direction in which the pipe sockets are joined and bearing against a radial face of one of the teeth of the ratchet stop (23), these radially extending surfaces being mounted on such a face respectively of the teeth of the ratchet stop (23) and of the wedge (26) of the arm (24) that the radial surfaces rest prestressed against one another when the pipe sockets (9 and 10) are drawn apart.

6. Washer system according to claim 5, characterized in that the resilient arm (24) and the radially extending surface (27) of its end portion of cuneiform cross-section point away from the free end of the pipe socket on which the arm is mounted.

7. Washer system according to any of claims 1 to 6, characterized in that the resilient arm (24) incorporates a recess (29) which serves to engage a bar-shaped tool by means of which the resilient arm (24) can be moved out of engagement with the ratchet stop (23).

8. Washer system according to any of claims 1 to 7, characterized in that between its free end and the ratchet stop (23), the pushed-in pipe socket (10) has at least one annular groove incorporated into its generated surface, and into said groove is inserted a ring seal (18) which bears tightly all round against the inside of the pushed-on pipe socket (9), and that the groove (20) of the tongue-and-groove joint is set deeply enough into the pushed-on pipe socket (9) and the shoulder (21) of the pushed-in pipe socket (10) is set high enough for the ring seal (18) to be unable to strike the free end portion (26) of the resilient arm (24) when the pipe sockets (9 and 10) are inserted one inside the other.

9. Washer system according to any of claims 1 to 8, characterized in that the pushed-on pipe socket (9) exhibits greater clearance in the end portion (19) in which the ratchet stop (23) is disposed than in the portion which is sealed by a ring seal (18) towards the pushed-in pipe socket (10).

10. Washer system according to claim 9, characterized in that thanks to at least one projection (22) moulded onto its generated surface, the pushed-in pipe socket (10) rests virtually without any radial freeplay against the end portion (19) of the other pipe socket (9), which exhibits greater clearance.

## Revendications

1. Dispositif de lavage pour un diffuseur d'un feu ou d'un phare d'un véhicule, comportant un premier tube (10) qui porte une buse (3) et qui, par son extrémité opposée à la buse (3), peut passer par une ouverture (11) prévue dans une pièce extérieure (12) de la carrosserie, ainsi qu'un second tube (9) qui peut se déplacer axialement dans un carter d'un mécanisme de déplacement hydraulique (2), qui est guidé sans possibilité de rotation et qui s'enfile, avec serrage, sur le premier tube (10) ou s'enfile, avec serrage, dans ce premier tube, le mécanisme de déplacement (2) pouvant se fixer sur une pièce intérieure (7) de la carrosserie par un moyen de fixation et la buse (3) pouvant être amenée par le mécanisme de déplacement (2) dans une position de repos, dans laquelle elle, ou un composant (16) qui l'entoure, jouxte la face extérieure de la pièce extérieure (12) de la carrosserie ou dans une position de service, caractérisé par le fait que, dans la position de repos de la buse (3), les tubes (9 et 10), enfilés l'un dans l'autre, présentent un mécanisme de verrouillage automatique qui empêche qu'ils sortent l'un de l'autre et qui est constitué d'un mécanisme à cliquet (23), rapporté sur le tube (10) enfilé dans l'autre et d'un cliquet d'arrêt (24) qui vient élastiquement en prise dans le mécanisme à cliquet (23), et qu'entre les deux tubes (9 et 10) se trouve un guidage axial (20, 21) grâce auquel le premier tube (10) est verrouillé à l'égard d'une rotation autour de son axe longitudinal.

2. Dispositif de lavage selon la revendication 1, caractérisé par le fait que le guidage axial (20, 21) entre les deux tubes (9 et 10) est formé d'une liaison à rainure et clavette.

3. Dispositif de lavage selon la revendication 2, caractérisé par le fait que le mécanisme à cliquet (23) du type crémaillère est formé d'un appendice (21) qui, dans son extension longitudinale, est orienté selon la direction du joint des tubes (9 et 10), est venu de moulage sur la surface latérale du tube (10) enfilé dans l'autre et sert de clavette pour la liaison par rainure et clavette, les dents du mécanisme à cliquet (23) du type à crémaillère étant réalisées dans la surface de l'appendice (21) orientée radialement et la rainure (20) étant réalisée dans la face intérieure du tube (9) enfilé sur l'autre et allant jusqu'à l'extrémité libre du tube (9) et s'y ouvrant.

4. Dispositif de lavage selon l'une des revendications 1 à 3, caractérisé par le fait que le cliquet d'arrêt (24) est formé par un bras qui est réalisé avec élasticité radiale et qui est venu de moulage sur le tube (9) enfilé sur l'autre, sur le bord d'une ouverture (25) prévue dans le fond de la rainure (20).

5. Dispositif de lavage selon l'une des revendications 1 à 4, caractérisé par le fait que, par sa portion d'extrémité libre (26), le bras élastique (24) est orienté vers le mécanisme à cliquet (23), vient en prise entre deux dents du mécanisme à cliquet (23) et a la forme d'un coin dans une coupe prise selon la direction de son extension longitudinale, une surface (27) du coin étant orientée à peu près radialement et perpendiculairement à la direction du joint du tube et s'appuyant contre une surface radiale de l'une des dents du mécanisme à cliquet (23), ces surfaces orientées radialement étant prévues sur une face des dents du mécanisme à cliquet (23) ou du coin (26) du bras (24) de façon telle que les surfaces orientées radialement s'appuient l'une contre l'autre, sous précontrainte, lorsque les tubes (9 et 10) sortent l'un de l'autre.

6. Dispositif de lavage selon la revendication 5, caractérisé par le fait que le bras élastique (24) et la surface orientée radialement (27) de sa portion d'extrémité en forme de coin en coupe sont dirigés vers l'extrémité libre du tube sur lequel le bras est rapporté.

7. Dispositif de lavage selon l'une des revendications 1 à 6, caractérisé par le fait que dans le bras élastique (24) est prévu un évidement (29) qui sert à y insérer un outil en forme de tige avec lequel on peut amener le bras élastique (24) hors de la prise avec le mécanisme à cliquet (23).

8. Dispositif de lavage selon l'une des revendications 1 à 7, caractérisé par le fait que le tube (10) enfilé dans l'autre présente, entre son extrémité libre et le mécanisme à cliquet (23), au moins une rainure annulaire qui est prévue dans sa surface périphérique et dans laquelle est insérée une garniture d'étanchéité annulaire (18) qui s'appuie, sur la périphérie et avec serrage, sur la face intérieure du tube (9) enfilé sur l'autre et que la rainure (20) de la liaison par rainure et clavette est prévue suffisamment profonde dans le tube (9) enfilé sur l'autre et l'appendice (21) du tube (10) enfilé dans l'autre, l'est suffisamment haut pour que, lorsque l'on enfile l'un dans l'autre les tubes (9 et 10), la garniture d'étanchéité annulaire (18) ne puisse pas buter contre la portion d'extrémité libre (26) du bras élastique (14).

9. Dispositif de lavage selon l'une des revendications 1 à 8, caractérisé par le fait que le tube (9) enfilé sur l'autre présente, dans sa portion d'extrémité (19) dans laquelle est disposé le mécanisme à cliquet (23), un plus grand passage libre que dans la portion qui est rendue étanche par une garniture d'étanchéité annulaire (18) par rapport au tube (10) enfilé dans l'autre.

10. Dispositif de lavage selon la revendication 9, caractérisé par le fait que le tube (10) enfilé dans l'autre s'appuie, largement sans jeu dans le sens radial, par au moins une saillie (22) venue de moulage sur sa surface périphérique, contre la portion d'extrémité (19) de l'autre tube (9) qui présente un plus grand passage libre.
